# EUROPÄISCHE PATENTSCHRIFT

(11) **EP 4 241 948 B1**
(45) Veröffentlichungstag und Bekanntmachung des Hinweises auf die Patenterteilung: **14.05.2025**
(21) Anmeldenummer: 23159555.4
(22) Anmeldetag: 02.03.2023
(51) Int. Cl.: B27D 5/00, B23C 3/12, B27C 5/00

(54) **AGGREGAT ZUR BEARBEITUNG EINER KANTENFLÄCHE EINER HOLZWERKSTOFFPLATTE UND VERFAHREN ZUR BEARBEITUNG**
AGGREGATE FOR MACHINING AN EDGE SURFACE OF A WOOD-BASED PANEL AND METHOD FOR MACHINING THE SAME
AGRÉGAT POUR L'USINAGE D'UNE SURFACE DE CHANT D'UN PANNEAU EN MATÉRIAU DÉRIVÉ DU BOIS ET PROCÉDÉ D'USINAGE

(30) Priorität: 07.03.2022 DE 102022105259
(43) Veröffentlichungstag der Anmeldung: 13.09.2023
(73) Patentinhaber: Mündkemüller, Bodo, 33335 Gütersloh (DE)
(72) Erfinder: Mündkemüller, Bodo, 33335 Gütersloh (DE)
(74) Vertreter: Pellengahr, Maximilian Rudolf

(56) Entgegenhaltungen:
- EP-A2- 1 997 597
- DE-A1- 102010 003 274
- DE-A1- 102017 207 675
- DE-C1- 19 947 164

## Beschreibung

Die vorliegende Anmeldung betrifft ein Aggregat zur Bearbeitung einer Kantenfläche einer Holzwerkstoffplatte gemäß dem Oberbegriff von Anspruch 1. Ein solches Aggregat ist aus dem Dokument DE 10 2017 207675 A1 bekannt. Ferner betrifft die Anmeldung eine Vorrichtung zur Bearbeitung einer Kantenfläche einer Holzwerkstoffplatte gemäß dem Oberbegriff von Anspruch 8. Schließlich betrifft die vorliegende Anmeldung ein Verfahren zur Bearbeitung einer Holzwerkstoffplatte gemäß dem Oberbegriff von Anspruch 14.

Holzwerkstoffplatten können beispielsweise von Spanplatten, MDF Platten und dergleichen gebildet sein. Sie werden insbesondere im Bereich des Möbelbaus eingesetzt, beispielsweise in der Küchenmöbelindustrie. Diese Holzwerkstoffplatten, die typischerweise im Verhältnis zu ihrer Länge und zu ihrer Breite eine geringe Dicke aufweisen, werden in der Regel mittels einer Vorrichtung auf ein vorbestimmtes Maß geschnitten, wodurch randseitig an den Schnittkanten Kantenflächen entstehen. Um diese zu überdecken, werden Kantenprofile auf die Kantenflächen aufgesetzt und mittels eines Leims an der Kantenfläche befestigt. Die Kantenprofile bilden sowohl optisch einen sauberen randseitigen Abschluss der Holzwerkstoffplatte als auch einen Schutz gegen das Eindringen von Feuchtigkeit in die jeweilige Holzwerkstoffplatte.

Das Aggregat umfasst ein drehantreibbares Werkzeug, das um eine Werkzeugachse drehantreibbar ist. Das Werkzeug weist einen sich kreisringförmig um die Werkzeugachse umlaufenden Arbeitsbereich auf. Insbesondere kann das Werkzeug in Form einer Kreisscheibe ausgebildet sein, die bezogen auf die Werkzeugachse einen Radius sowie eine parallel zu der Werkzeugachse gemessene Dicke aufweist, die zwischen einer oberen und einer unteren Stirnseite des Werkzeugs gemessen wird. Hierbei ist es insbesondere denkbar, dass der Radius, in dem sich der Arbeitsbereich um die Werkzeugsachse erstreckt, die Dicke des Werkzeugs übersteigt, wobei vorzugsweise der Radius mindestens doppelt so groß, vorzugsweise mindestens dreimal so groß, weiter vorzugsweise mindestens viermal so groß, ist wie die Dicke.

Der Arbeitsbereich, der insbesondere in Form einer Tangentialfläche des Werkzeugs bezogen auf die Werkzeugachse ausgebildet sein kann, weist ein Arbeitsrelief auf, das bezogen auf die Werkzeugachse orientierte Erhöhungen und Vertiefungen aufweist. Das Arbeitsrelief kann insbesondere nach Art eines Schmirgelpapiers aufgeraut ausgebildet ist, wobei das Arbeitsrelief in dem Arbeitsbereich eine große Vielzahl von kleinsten Erhöhungen und Vertiefungen aufweist, die die Rauheit bilden.

### Stand der Technik

Das Aufbringen von Kantenprofilen auf die bekannten Flächen einer jeweiligen Holzwerkstoffplatte unterliegt hohen Anforderungen an die technische Verarbeitung. Insbesondere können Unebenheiten, die in der Kantenfläche nach dem Zuschnitt der Holzwerkstoffplatte vorliegen, nach dem Auftragen des jeweiligen Kantenprofils sichtbar bleiben, da die Unebenheiten gewissermaßen durch das (typischerweise sehr dünne) Kantenprofil "durchdrücken". Außerdem kann es durch Unebenheiten zu einer mangelhaften Adhäsion des Kantenprofils an der jeweiligen Kantenfläche kommen, wodurch dauerhaft mit einer zumindest lokalen Ablösung des Kantenprofils gerechnet werden muss.

Um diesen Problemen zu begegnen, schlägt beispielsweise die deutsche Offenlegungsschrift DE 10 2014 225 849 A1 eine Vorrichtung vor, die die Kantenfläche vor dem Auftragen einer jeweiligen Leimschicht bearbeitet. Hierbei kommen verschiedene Werkzeuge zum Einsatz, mittels derer Späne, die an der jeweiligen Kantenfläche der Holzwerkstoffplatte vorstehen, entfernt werden. Zudem wird die Kantenfläche nach dem Entfernen derartiger Späne geschliffen und sodann geglättet. Letztgenannter Schritt umfasst insbesondere das Eindrücken verbliebener Späne und sonstiger Unebenheiten, wodurch eine möglichst ebene Oberfläche erreicht werden soll.

Das Problem vorstehender Späne ergibt sich oftmals in einer Mittellage einer jeweiligen Holzwerkstoffplatte. Einander gegenüberliegende Außenlage, die die sichtbaren Oberflächen der Holzwerkstoffplatte bilden, sind in der Regel dicht ausgebildet, während die Mittellage von geringerer Qualität ist, die sich insbesondere dadurch äußert, dass die Mittellage von groben Spänen gebildet ist. Nach dem Zuschnitt einer Holzwerkstoffplatte kommt es insbesondere im Bereich der Mittellage dazu, dass einzelne Partikel, vor allem die genannten Späne, über die Kantenfläche hinaus vorstehen.

Die bekannte Vorrichtung hat sich insoweit als nachteilig herausgestellt, als die Entfernung von Spänen und sonstigen Partikeln, die an der Kantenfläche vorstehen, nicht in ausreichend zuverlässiger Weise gelingt. Insbesondere hat sich gezeigt, dass im Zuge eines Leimauftrags, der im Anschluss an die Bearbeitung der Kantenfläche vorgenommen wird, weiterhin ein Abnehmen von Partikeln von der Kantenfläche stattfindet. Diese Partikel werden sodann den sog. "Leimtopf' zurückgeführt, in dem der Leim vorgehalten wird. Dies führt regelmäßig zu Verstopfungen des jeweiligen Leimauftragssystems sowie zu einem unsauberen Auftrag des Leims, was wiederrum eine schlechte Anhaftung des Kantenprofils auf der Kantenfläche zur Folge hat.

### Aufgabe

Der vorliegenden Anmeldung liegt mithin die Aufgabe zugrunde, eine Vorrichtung bereitzustellen, mittels der die Vorbereitung einer jeweiligen Kantenfläche einer Holzwerkstoffplatte im Vorfeld des Auftrags von Leim zur Befestigung eines Kantenprofils verbessert ist.

### Lösung

Die zugrunde liegende Aufgabe wird erfindungsgemäß mittels eines Aggregats mit den Merkmalen des Anspruchs 1 gelöst. Vorteilhafte Ausgestaltungen ergeben sich aus den zugehörigen Unteransprüchen.

Das erfindungsgemäße Aggregat ist dadurch gekennzeichnet, dass der Arbeitsbereich konvex ausgeformt ist. Diese Ausformung ist bezogen auf einen Querschnitt des Werkzeugs vorhanden, der die Werkzeugachse des Werkzeugs beinhaltet. Die konvexe, auch als "ballig" bezeichnete Ausformung des Arbeitsbereichs äußert sich mithin dadurch, dass ein von der Werkzeugachse zu einer äußeren Oberfläche gemessener Radius in einem bezogen auf die Dicke des Werkzeugs betrachteten Mittelbereich des Werkzeugs größer ist als ein gleichartig gemessener Radius an einem oberen oder unteren Rand des Werkzeugs. Bevorzugt ist der Arbeitsbereich über eine parallel zu der Werkzeugachse gemessene Höhe hinweg symmetrisch ausgebildet, sodass der Arbeitsbereich in seiner höhenmäßig betrachteten Mitte bezogen auf die Werkzeugachse einen Hochpunkt aufweist und zu den einander gegenüberliegenden Stirnseiten des Werkzeugs hin gleichartig radial auf die Werkzeugachse zulaufend geformt ist. Der Arbeitsbereich kann insbesondere im Querschnitt betrachtet die Form einer Parabel aufweisen. Die Form des Arbeitsbereichs ist bevorzugt symmetrisch bezogen auf eine Mittelebene des Werkzeugs, die sich senkrecht zu der Werkzeugsachse erstreckt und das Werkzeug mittig in zwei gleiche Hälften teilt. Ein von der Werkzeugsachse bis zu dem Arbeitsbereich des Werkzeugs gemessener Radius ist in der Mittelebene größer ist als in stirnseitigen Randebenen des Werkzeugs.

Das erfindungsgemäße Aggregat hat viele Vorteile. Somit führt die konvexe Ausgestaltung des Arbeitsbereichs dazu, dass von der Kantenfläche der Holzwerkstoffplatte in einem in Dickenrichtung der Holzwerkstoffplatte betrachteten Mittelbereich mehr Partikel abgehoben werden als an einander gegenüberliegenden Rändern der Kantenfläche, die einer Oberseite bzw. einer Unterseite der Holzwerkstoffplatte zugeordnet sind. Mit anderen Worten wird die Kantenfläche infolge des Eingriffs mit dem Werkzeug korrespondierend zu dem konvex ausgestalteten Arbeitsbereich mit einer konkaven Form versehen. Diese Art des Eingriffs führt dazu, dass in zuverlässiger Weise die Partikel, die an der Kantenfläche in unerwünschter Weise vorstehen, abgehoben werden. Die unterschiedliche Ausprägung des Eingriffs des Werkzeugs über die Dicke der Holzwerkstoffplatte hinweg ist unter dem oben genannten Aspekt der verschiedenen Qualitätsstufen der Holzwerkstoffplatte (dichte Randbereiche und grobe Mittellage schlechterer Qualität) besonders vorteilhaft, da das Abheben vorstehender Partikel verstärkt dort vorgenommen wird, wo die Problematik solcher Partikel am stärksten ausgeprägt ist. Im Zuge des sich anschließenden Leimauftrags auf die Kantenfläche kommt es daraufhin - so haben Versuche gezeigt - zu einem stark verringerten Abheben sowie sich daran anschließenden Eintragen von Partikeln in einen jeweiligen Leimtopf, in dem der Leim vorgehalten wird.

Als weiterer Vorteil wird die Kantenfläche so weit geglättet, dass nennenswerte Unebenheiten, die sich ansonsten infolge vorstehender Partikel, insbesondere Späne, ergeben können, beseitigt werden. Dies hat den Vorteil, dass ein jeweiliges Kantenprofil, das auf die Kantenfläche aufgeleimt wird, keine optisch störenden Erhebungen oder dergleichen aufweist. Die Qualität der fertigen Holzwerkstoffplatte wird somit bei Verwendung des erfindungsgemäßen Aggregats verbessert. Ferner ist eine Bildung von lokalen Hohlräumen unterhalb des aufgeleimt Kantenprofils vermindert, bevorzugt vollständig verhindert, sodass das Risiko eines ungewollten Ablösens des Kantenprofils von der Kantenfläche minimiert ist.

Als weiterhin besonders vorteilhaft hat sich herausgestellt. dass das Aggregat sich vorteilhaft für die Bearbeitung von Kantenflächen einer MDF-Platte auswirkt. Die Kantenflächen derartiger Holzwerkstoffplatten sind typischerweise äußerst glatt, das heißt weisen eine sehr geringe Rauigkeit auf. Dies ist für den Auftrag von Leim sowie das Aufbringen eines Kantenprofils nachteilig, da die Oberfläche der Kantenfläche aufgrund der sehr glatten Struktur vergleichsweise klein ist. Um eine bessere Adhäsion mittels des Leims zu erzielen, ist es vorteilhaft, wenn die Kantenfläche leicht aufgeraut ist. Ein ebensolches Aufrauen wird mittels des Aggregats bzw. des Werkzeugs erreicht. Entsprechend führt eine Bearbeitung einer derartigen Holzwerkstoffplatte mittels des erfindungsgemäßen Aggregats zu einer besseren Haftung des später aufgebrachten Kantenprofils.

Bevorzugt ist das Werkzeug in dem Arbeitsbereich mit einer Diamantbeschichtung versehen. Dies hat den Vorteil, dass eine Standzeit des Werkzeugs aufgrund der hohen Härte einer solchen Beschichtung besonders lang ist. Zudem ist es möglich, die Diamantbeschichtung wiederholt zu erneuern, sodass das Werkzeug als solches über einen langen Zeitraum eingesetzt werden kann, ohne als Ganzes getauscht werden zu müssen. Schließlich ist es mittels einer Diamantbeschichtung besonders einfach möglich, ein raues Arbeitsrelief zu erzeugen, mittels dessen das gewünschte Abheben vorstehender Partikel besonders effizient erreicht werden kann. Ein Werkzeugkörper des Werkzeugs kann beispielsweise von Aluminium oder Stahl gebildet sein.

In einer besonders vorteilhaften Ausgestaltung des erfindungsgemäßen Aggregats umfasst selbiges zumindest zwei Tastrollen, die jeweils um eine Drehachse drehbar ausgebildet sind. Die Drehachsen der Tastrollen sind bevorzugt parallel zueinander sowie parallel zu der Werkzeugachse orientiert. Die Tastrollen sind dazu eingerichtet, das Werkzeug relativ zu der Kantenfläche abstandsmäßig zu führen. Hierzu sind die Tastrollen mit dem Werkzeug in solcher Weise gekoppelt, dass sie einen Einfluss auf einen Abstand des Werkzeugs zu der Kantenfläche der Holzwerkstoffplatte nehmen können. Dies kann beispielsweise mittels Koppelarmen erfolgen. Hierdurch kann das Werkzeug besonders präzise relativ zu der Kantenfläche geführt werden. Insbesondere ist ein unbeabsichtigter Eingriff des Werkzeugs mit der Kantenfläche in solcher Weise verhindert, dass das Werkzeug zu tief in das Material der Holzwerkstoffplatte im Bereich der Kantenfläche eindringt und hierbei unbeabsichtigt Material abträgt oder gar nicht mit der Holzwerkstoffplatte eingreift. Stattdessen wird das Werkzeug mittels der Tastrollen derart relativ zu der Kantenfläche geführt, dass lediglich der Abtrag unerwünscht vorstehender Partikel gemäß vorstehender Beschreibung vorgenommen wird. Hierbei handelt es sich insbesondere nicht um ein planmäßiges Abtragen einer Materialschicht von der Kantenfläche, sondern eher um ein Säubern der Kantenfläche von vorstehenden Partikeln.

Für die beschriebene Ausführung kann es weiterhin vorteilhaft sein, wenn das Werkzeug zwischen den Tastrollen angeordnet ist. Diese Anordnung hat zur Folge das die Kantenfläche an einer jeweiligen Stelle im Zuge der Bearbeitung mittels des Aggregats zuerst mit der Kontaktfläche der ersten Tastrolle, sodann mit dem Arbeitsbereich des Werkzeugs und schließlich mit der Kontaktfläche der zweiten Tastrolle in Kontakt tritt. Diese Art der Anordnung ist für die abstandsmäßige Führung des Werkzeugs relativ zu der Kantenfläche besonders vorteilhaft, da das Werkzeug sowohl in einem Einlauf als auch in einem Auslauf jeweils mittels einer Tastrolle relativ zu der Holzwerkstoffplatte geführt ist.

Sofern das Aggregat mit dem beschriebenen Tastrollen ausgestattet ist, kann es weiterhin von Vorteil sein, wenn diese derart relativ zu dem Werkzeug angeordnet sind, dass bei einer bestimmungsgemäßen Bewegung einer Holzwerkstoffplatte relativ zu dem Aggregat die Kantenfläche der Holzwerkstoffplatte sowohl mit Kontaktflächen der Tastrollen als auch mit dem Arbeitsbereich des Werkzeugs in Kontakt tritt. Hierdurch kann der Vorteil erreicht werden, dass die Tastrollen als solche mit der Kantenfläche in Eingriff stehen und hierdurch Partikel, die über die Kantenfläche vorstehen, in Richtung der Holzwerkstoffplatte eindrücken können. Mit anderen Worten haben die Tastrollen eine glättende Wirkung auf die Kantenfläche der Holzwerkstoffplatte. Das unerwünschte Abheben von Partikeln im Zuge des Leimauftrags, der nach der Bearbeitung der Holzwerkstoffplatte mittels des Aggregats stattfindet, ist hierdurch weiter reduziert.

In einer bevorzugten Ausführungsform weist der Arbeitsbereich eine Diamantbeschichtung auf, die in dem Arbeitsrelief ausgebildet ist. Ein solcher Arbeitsbereich ist besonders gut geeignet dazu, mit der Kantenfläche der Holzwerkstoffplatte einzugreifen und hierdurch in der gewünschten Weise vorstehende Partikel abzuheben. Die Diamantbeschichtung weist bevorzugt eine Körnung nach CAMI von mindestens 100, vorzugsweise mindestens 150, weiter vorzugsweise mindestens 200, auf.

Das Werkzeug des erfindungsgemäßen Aggregats umfasst mindestens einen Abfuhrkanal, der in dem Arbeitsbereich ausgebildet ist. Hierbei ist der Abfuhrkanal gegenüber einer radial äußeren Oberfläche des Werkzeugs in dem Arbeitsbereich radial in Richtung der Werkzeugachse zurückgesetzt und bildet mithin gewissermaßen eine lokale Vertiefung in dem Arbeitsbereich aus. Der Abfuhrkanal ist dazu geeignet, von der Kantenfläche der Holzwerkstoffplatte abgenommene Partikel, insbesondere Späne, aus dem Arbeitsbereich abzuführen. Hierzu ist es von Vorteil, wenn sich der Abfuhrkanal derart in Dickenrichtung des Werkzeugs erstreckt, dass er an mindestens einer Stirnseite des Werkzeugs, vorzugsweise an beiden einander gegenüberliegenden Stirnseiten des Werkzeugs, in eine Umgebung des Werkzeugs mündet. Die Erstreckung des Abfuhrkanals in Dickenrichtung kann hierbei als vektoriell anteilige Erstreckung verstanden werden, wobei eine Längsachse des Abfuhrkanals beispielsweise eine parallel zu der Werkzeugachse orientierte Komponente als auch eine in Umfangsrichtung des Werkzeugs orientierte Komponente aufweist. Mit anderen Worten ist es denkbar, dass der Abfuhrkanal schräg bezogen auf die Werkzeugachse ausgerichtet ist, bevorzugt in einem Winkel von 45° bezogen auf die Werkzeugachse. Auch ist es denkbar, dass der Abfuhrkanal in sich gerade oder gekrümmt, insbesondere mehrfach gekrümmt, ausgebildet ist.

Für die Abfuhr abgenommener Partikel ist es besonders von Vorteil, wenn der Abfuhrkanal an zumindest einer Stelle abseits des Arbeitsbereichs in einen Freiraum oder eine Umgebung mündet, sodass abgenommene Partikel von der Kantenfläche, die mit dem Arbeitsbereich in Eingriff steht, in Richtung des Freiraums bzw. der Umgebung abgeführt werden können. In einer besonders vorteilhaften Ausgestaltung des Aggregats ist der Arbeitsbereich entlang seines Umfangs vollständig von einem zick-zack-förmigen System aus Abfuhrkanälen durchzogen, die bevorzugt jeweils in einem projizierten Winkel von 45° gegenüber der Werkzeugachse geneigt ausgebildet sind. Die mittels des Arbeitsreliefs abgehobenen Partikel können sodann unmittelbar in den nächstgelegenen Abfuhrkanal geleitet und mittels dieses Abfuhrkanals zu einer der Stirnseiten des Werkzeugs abgeführt werden. Die Abfuhrkanäle erstrecken sich bei dieser Ausgestaltung in bevorzugter Weise zwischen den Stirnseiten des Werkzeugs, wobei sie die Stirnseiten derart erreichen, dass sie an den Stirnseiten jeweils zu einer Umgebung des Werkzeugs hin offen sind. Auf diese Weise können die abgehobenen Partikel unmittelbar an den Stirnseiten der Abfuhrkanäle aus selbigen austreten. Eine entsprechende Ausgestaltung ist nachstehend im Rahmen des Ausführungsbeispiels veranschaulicht.

In einer weiterhin vorteilhaften Ausgestaltung des erfindungsgemäßen Aggregats weist das Werkzeug einen Spülkanal auf, der sich in radiale Richtung bezogen auf die Werkzeugachse durch einen Werkzeugkörper des Werkzeugs hindurch erstreckt. Hierbei erstreckt sich der Spülkanal von einer umfangsseitigen Oberfläche des Werkzeugs bis zu einer zentralen Wellenaufnahme des Werkzeugs, die mittig an dem Werkzeug ausgebildet ist und in der eine Antriebswelle lagerbar ist. Insbesondere ist die Wellenaufnahme konzentrisch um die Werkzeugachse herum ausgebildet und bildet eine Ausnehmung, in die eine Antriebswelle einsetzbar ist. Der Spülkanal ist dazu geeignet, insbesondere einen Spülluftstrom zu der umfangsseitigen Oberfläche des Werkzeugs zu leiten. Diese kann sowohl einen radial außen liegenden Abschluss des Arbeitsbereichs als auch einen Boden eines Abfuhrkanals bilden, der radial gegenüber dem Arbeitsbereich in Richtung der Werkzeugachse zurückgesetzt ist.

Sofern mindestens ein Abfuhrkanal in dem Arbeitsbereich ausgebildet ist, ist es von besonderem Vorteil, wenn der Spülkanal in den Abfuhrkanal mündet. Bevorzugt umfasst das Werkzeug eine Mehrzahl von Spülkanälen, die vorteilhafterweise äquidistant um die Werkzeugachse verteilt ausgebildet sind. In vorteilhafter Weise ist der Spülkanal in sich gerade ausgebildet, sodass er einen möglichst geringen Strömungswiderstand für einen Spülluftstrom bildet.

Bevorzugt ist der Spülkanal zu der Wellenaufnahme hin geöffnet ausgebildet. Hierdurch ist es besonders einfach möglich, den Spülkanal mit einem Spülluftstrom zu beschicken, wobei insbesondere eine Antriebswelle, die in der Wellenaufnahme aufgenommen ist, in Form einer Hohlwelle ausgebildet sein kann. Auf diese Weise ist es möglich, den Spülluftstrom ausgehend von einer Druckquelle, insbesondere von einem Kompressor, durch einen in der als Hohlwelle ausgebildeten Antriebswelle gebildeten Strömungskanal zu dem Spülkanal und schließlich durch den Spülkanal zu der umfangsseitigen Oberfläche des Werkzeugs zu leiten. Dort ist es unter Wirkung eines solchen Spülluftstroms besonders einfach möglich, von der Kantenfläche abgehobene Partikel abzuführen. Insbesondere können die Partikel, die in einem Abfuhrkanal anfallen, mittels des Spülluftstroms in dem Abfuhrkanal mobilisiert und entlang des Abfuhrkanals zu einem Ende transportiert werden, an dem die Partikel beispielsweise in eine Umgebung des Werkzeugs hin austreten.

Die zugrunde liegende Aufgabe wird ferner erfindungsgemäß mittels einer Vorrichtung mit den Merkmalen des Anspruchs 8 gelöst. Vorteilhafte Ausgestaltungen ergeben sich aus den zugehörigen Unteransprüchen.

Die Vorrichtung umfasst erfindungsgemäß ein Aggregat gemäß der vorstehenden Beschreibung, mittels dessen eine Kantenfläche einer Holzwerkstoffplatte im Vorfeld eines Leimauftrags bearbeitbar ist. Ferner umfasst die Vorrichtung eine Antriebseinheit, mittels der das Aggregat betreibbar ist. Hierzu weist die Antriebseinheit mindestens einen elektrischen Antrieb, insbesondere in Form eines Elektromotors, auf, mittels dessen eine Antriebswelle der Antriebseinheit drehantreibbar ist. Diese Antriebswelle ist in Drehmoment übertragender Weise mit dem Werkzeug des Aggregats verbunden, das eine entsprechende Wellenaufnahme aufweist. Diese ist insbesondere konzentrisch zu der Werkzeugachse des Werkzeugs ausgebildet, wobei das Werkzeug bevorzugt in Form einer Kreisscheibe ausgebildet ist.

Das erfindungsgemäße Aggregat ist mittels der erfindungsgemäßen Vorrichtung besonders einfach betreibbar. Die sich hierdurch ergebenden Vorteile sind vorstehend bereits dargelegt. Insbesondere ist es aufgrund der konvexen Ausgestaltung des Arbeitsbereichs des Werkzeugs besonders einfach möglich, die Kantenfläche der Holzwerkstoffplatte für einen Leimauftrags zu präparieren. Hierbei wird erreicht, dass über die Kantenfläche hinaus vorstehende Partikel zuverlässig abgehoben werden, wodurch ein unbeabsichtigter Eintrag dieser Partikel in einen Leimtopf des Leims vermieden wird.

In besonders bevorzugter Weise umfasst die Vorrichtung eine Spanneinrichtung, mittels der das Aggregat in Richtung auf eine jeweilige Kantenfläche zu vorspannbar ist. Die Spanneinrichtung ist mithin dazu geeignet, das Aggregat gegen die Kantenfläche zu drücken, wodurch ein fortwährender Eingriff des Werkzeugs mit der Kantenfläche sichergestellt ist. Sofern das Aggregat in bevorzugter Weise zwei Tastrollen gemäß vorstehender Beschreibung aufweist, ist die Spanneinrichtung des Weiteren dazu geeignet, Kontaktflächen der Tastrollen gleichermaßen in Kontakt mit der Kantenfläche der Holzwerkstoffplatte zu halten. Hierbei dienen die Tastrollen gemäß vorstehender Erläuterung primär dazu, das Werkzeug in einem definierten Abstand zu der Kantenfläche zu halten und es relativ zu der Kantenfläche zu führen. Auf diese Weise ist ein unbeabsichtigter Eingriff des Werkzeugs mit der Kantenfläche verhindert, bei dem das Werkzeug beispielsweise derart tief in die Holzwerkstoffplatte eintritt, dass ein Materialabtrag vergleichbar zu einer Fräsung stattfindet.

In besonders bevorzugter Ausgestaltung ist die Spanneinrichtung mit einer doppelwirkenden Kolben-Zylinder-Einheit ausgestattet, die zwei Arbeitsräume aufweist. Diese Arbeitsräume sind alternativ mit einem Arbeitsfluid, insbesondere Luft, beaufschlagbar, wodurch der Kolben der Kolben-Zylinder-Einheit alternativ aus dem Zylinder ausgefahren oder in den Zylinder eingefahren werden kann. Diese Ausgestaltung ermöglicht es, das Aggregat bedarfsgerecht zu aktivieren oder zu deaktivieren, wobei im Falle einer Aktivierung der Arbeitsraum mit dem Arbeitsfluid beaufschlagt wird, der ein Vorspannen des Aggregats gegen die Kantenfläche bewirkt und im Falle einer Deaktivierung der andere Arbeitsraum mit dem Arbeitsfluid beaufschlagt wird, sodass das Aggregat, d.h. insbesondere das Werkzeug, außer Eingriff mit der Kantenfläche gebracht wird. In bevorzugter Ausgestaltung umfasst die Spanneinrichtung ferner einen Kompressor, mittels dessen die Arbeitsräume wechselweise mit pneumatischen Druck beaufschlagbar sind. Das Arbeitsfluid ist bei dieser Ausgestaltung von einem Gas, insbesondere Luft, gebildet.

Weiterhin kann eine solche Ausgestaltung der Vorrichtung von besonderem Vorteil sein, bei der die Antriebswelle in Form einer Hohlwelle ausgebildet ist. Diese stellt einen Strömungskanal für ein Reinigungsmedium, insbesondere einen Spülluftstrom, bereit. Hierbei ist bevorzugt, dass die Antriebswelle mittelbar oder unmittelbar an einem der Wellenaufnahme des Werkzeugs abgewandten Ende mit einer Druckquelle zusammenwirkt, mittels der das Reinigungsmedium in den Strömungskanal leitbar ist. Diese Druckquelle kann insbesondere von einem Kompressor gebildet sein, mittels dessen ein Spülluftstrom erzeugbar und in den Strömungskanal leitbar ist. Das Reinigungsmedium ist auf diese Weise durch den in der Antriebswelle ausgebildeten Strömungskanal zu dem Werkzeug leitbar.

Diese Ausgestaltung ist dann von besonderem Vorteil, wenn das Werkzeug mindestens einen Spülkanal gemäß vorstehender Beschreibung aufweist. Mittels eines solchen ist das Reinigungsmedium ausgehend von der Wellenaufnahme zu der umfangsseitigen Oberfläche des Werkzeugs leitbar. Hierdurch ist ein fortwährendes Abführen der von der Kantenfläche abgehobenen Partikel möglich, wodurch das Werkzeug zuverlässig betreibbar ist. Der mindestens eine Spülkanal ist hierbei derart ausgebildet, dass er in strömungstechnischer Verbindung mit dem Strömungskanal der Antriebswelle steht, sodass das Reinigungsmedium unmittelbar von dem Strömungskanal der Antriebswelle in den Spülkanal übertreten kann.

Damit das Abführen der abgehobenen Partikel besonders effizient erfolgen kann, ist es weiterhin von Vorteil, wenn der Spülkanal umfangsseitig an dem Werkzeug in einen Abfuhrkanal desselben mündet, wobei der Abfuhrkanal gemäß vorstehender Beschreibung in einem Arbeitsbereich des Werkzeugs ausgebildet ist.

Die zugrunde liegende Aufgabe wird schließlich ferner erfindungsgemäß mittels eines Verfahrens mit den Merkmalen des Anspruchs 14 gelöst. Eine vorteilhafte Ausgestaltung ergibt sich aus dem zugehörigen Unteranspruch.

Das Verfahren sieht vor, dass die Kantenfläche eine Holzwerkstoffplatte vor dem Aufleimen eines Kantenprofils mittels eines Werkzeugs eines erfindungsgemäßen Aggregats bearbeitet wird. Die sich hierdurch ergebenden Vorteile sind vorstehend bereits dargelegt.

Für den Betrieb des Werkzeugs kann es hierbei besonders von Vorteil sein, wenn eine Drehzahl und eine Drehrichtung, mit der es betrieben wird, in Abhängigkeit von einer Vorschubgeschwindigkeit der Holzwerkstoffplatte und/oder in Abhängigkeit einer Art der Holzwerkstoffplatte gewählt wird. Insbesondere kann die Vorrichtung eine Steuereinheit aufweisen, die dazu eingerichtet ist, die Antriebseinheit in Abhängigkeit von der Vorschubgeschwindigkeit und/oder der Art der Holzwerkstoffplatte anzusteuern, sodass Betriebsparameter des Werkzeugs verändert werden. Die Ansteuerung kann insbesondere die Drehzahl und/oder die Drehrichtung des Werkzeugs betreffen. Vorzugsweise wirkt die Steuereinheit mit mindestens einer Sensoreinrichtung zusammen, mittels der Informationen zu der Vorschubgeschwindigkeit und/oder der Art der Holzwerkstoffplatte erfassbar und an die Steuereinheit leitbar sind. Auf diese Weise ist die Vorrichtung dazu geeignet, eine Veränderung der Betriebsparameter des Werkzeugs automatisch, das heißt insbesondere ohne ein manuelles Mitwirken eines Maschinenführers, vorzunehmen.

### Ausführungsbeispiele

Die Erfindung ist nachstehend anhand eines Ausführungsbeispiels, das in den Figuren dargestellt ist, näher erläutert. Es zeigt:
- Fig. 1:: Eine perspektivische Ansicht einer erfindungsgemäßen Vorrichtung, die ein erfindungsgemäßes Aggregat umfasst,
- Fig. 2:: Eine schematische Darstellung der Vorrichtung gemäß Figur 1,
- Fig. 3:: Ein Detail eines Werkzeugs des erfindungsgemäßen Aggregats in Zusammenwirkung mit einer Antriebswelle der Vorrichtung,
- Fig. 4:: Eine schematische Draufsicht des Werkzeugs des Aggregats in Zusammenwirkung mit zwei Tastrollen,
- Fig. 5:: Einen schematischen Querschnitt durch das Werkzeug des Aggregats,
- Fig. 6:: Eine perspektivische Ansicht des Werkzeugs gemäß Figur 5,
- Fig. 7:: Eine weitere perspektivische Ansicht des Werkzeugs gemäß Figur 5.

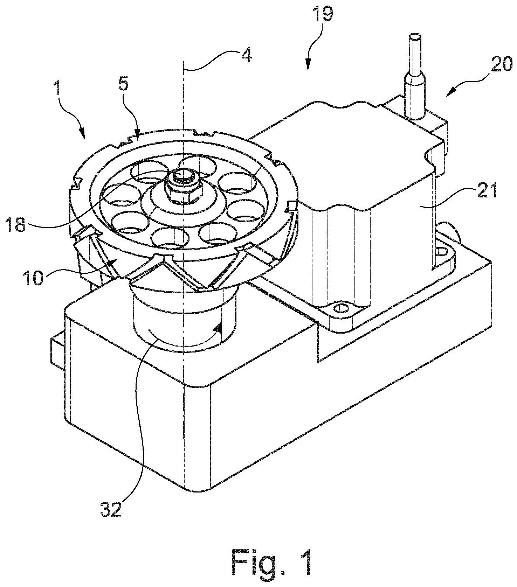

Ein Ausführungsbeispiel, das in den **Figuren 1 bis 7** gezeigt ist, umfasst ein erfindungsgemäßes Aggregat **1,** das zur Bearbeitung einer Kantenfläche **2** einer Holzwerkstoffplatte **3** eingerichtet ist. Eine solche Bearbeitung findet im Vorfeld eines Leimauftrags statt, der zwecks Anleimens eines in den Figuren nicht dargestellten Kantenprofils auf die Kantenfläche **2** aufgetragen wird.

Das Aggregat **1** umfasst ein Werkzeug **5,** das hier in Form einer Kreisscheibe ausgebildet ist. Das Werkzeug **5** ist um eine Werkzeugachse **4** drehantreibbar gelagert, wobei das Werkzeug **5** eine konzentrisch zu der Werkzeugachse **4** ausgebildete Wellenaufnahme **17** aufweist. Diese ist dazu geeignet, mit einer Antriebswelle **18** einer Antriebseinheit **20** zusammenzuwirken, sodass das Werkzeug **5** drehantreibbar ist. Das Werkzeug **5** umfasst ferner einen sich kreisringförmig um die Werkzeugachse **4** umlaufenden Arbeitsbereich **10,** der einen radial bezogen auf die Werkzeugachse **4** außen liegenden Abschluss des Werkzeugs **5** bildet. In einem Betrieb des Aggregats **1** ist vorgesehen, dass das Werkzeug **5** mit seinem Arbeitsbereich **10** in bearbeitenden Kontakt mit der Kantenfläche **2** tritt. Hierbei weist der Arbeitsbereich **10** ein Arbeitsrelief auf, mittels dessen das Werkzeug **5** bei bestimmungsgemäßer Verwendung mit der Kantenfläche **2** eingreift. Das Arbeitsrelief ist in dem gezeigten Beispiel von einer Diamantbeschichtung gebildet, die in den Arbeitsbereich **10** angeordnet ist. Die Diamantbeschichtung weist in dem gezeigten Beispiel eine Körnung nach CAMI von 250 auf.

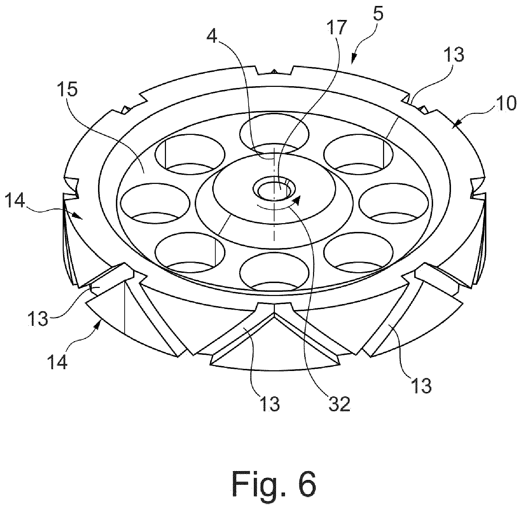

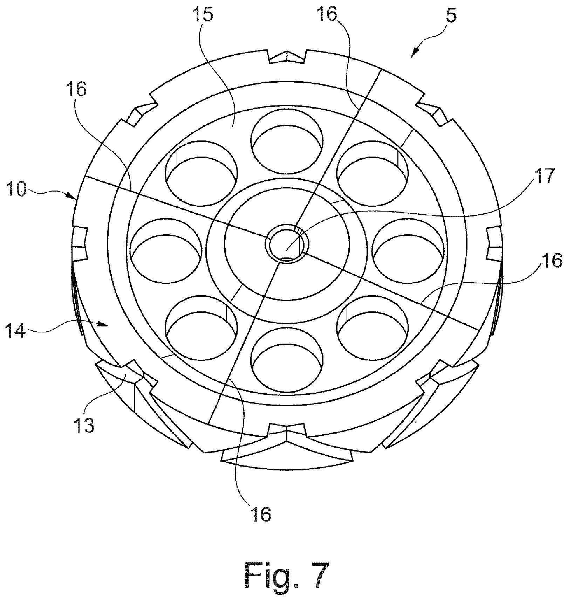

Ferner weist das Werkzeug **5** in dem gezeigten Beispiel eine Vielzahl von Abfuhrkanälen **13** auf, die radial außenliegend angeordnet und in Form einer Vertiefung, das heißt eines radialen Rücksprungs gegenüber dem Arbeitsbereich **10,** ausgebildet sind. Die Abfuhrkanäle **13** sind in dem gezeigten Beispiel in sich gerade und verlaufen unter einem Winkel von 45° gegenüber der Werkzeugachse **4.** Hierbei erstrecken sich die Abfuhrkanäle **13** über eine gesamte Dicke **11** des Werkzeugs **5,** d.h. von einer unteren Stirnseite **14** bis zu einer oberen Stirnseite **14** des Werkzeugs **5,** wobei sich die Abfuhrkanäle **13** anteilig in Umfangsrichtung sowie anteilig in Dickenrichtung des Werkzeugs **5** erstrecken. Die Abfuhrkanäle **13** ergeben sich besonders gut anhand der **Figuren 6** **und** **7****.** Sie sind bestimmungsgemäß dazu eingerichtet, von der Kantenfläche **2** abgenommene Partikel zu den Stirnseiten **14** des Werkzeugs **5** hin abzuleiten. Hierzu sind hier derart ausgebildet, dass sie zu den Stirnseiten **14** hin offen ausgebildet sind, sodass Partikel, die mittels der Abfuhrkanäle **13** abgeführt werden, an den stirnseitigen Enden des jeweiligen Abführkanals **13** ungehindert in eine Umgebung des Werkzeugs **5** übertreten und mithin aus dem jeweiligen Abfuhrkanal **13** austreten können. Das Abführen der Partikel nach ihrem Abheben ist auf diese Art und Weise besonders einfach möglich. Die Abfuhrkanäle **13** bilden in dem gezeigten Beispiel ein zick-zack-förmiges Profil in dem Arbeitsbereich **10** aus.

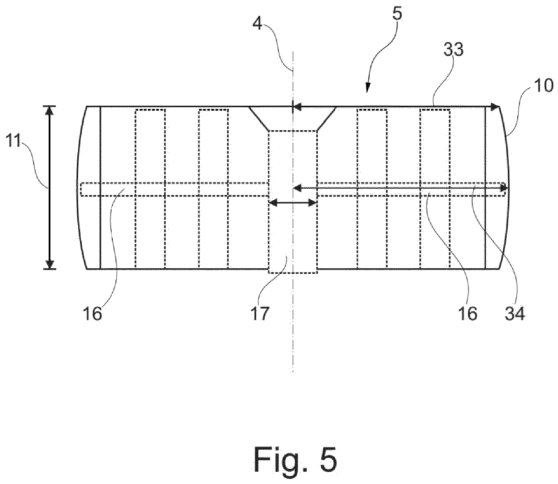

Erfindungsgemäß ist der Arbeitsbereich **10** des Werkzeugs **5** konvex ausgebildet. Dies ergibt sich besonders gut anhand der Darstellung gemäß **Figur 5** die konvexe Ausgestaltung hat zur Folge, dass ein stirnseitiger, in einer Randebene des Werkzeugs **5** gemessener Radius **33** des Werkzeugs **5** kleiner ist als ein mittiger, in einer Mittelebene gemessener Radius **34** des Werkzeugs **5.** In dem gezeigten Beispiel ist der Arbeitsbereich **10** bezogen auf die Mittelebene, die sich senkrecht zu der Werkzeugsachse **4** erstreckt und das Werkzeug **5** mittig teilt, symmetrisch ausgebildet, sodass der in der Mittelebene gemessene Radius **34** einen maximalen Radius des Werkzeugs **5** darstellt, während die stirnseitigen, in den Randebenen gemessenen Radien **33** minimale Radien des Werkzeugs **5** sind. Diese konvexe, mitunter auch als "ballig" bezeichnete Form des Arbeitsbereichs **10** hat den Vorteil, dass das Werkzeug **5** über die Dicke der Holzwerkstoffplatte **3** hinweg unterschiedlich stark mit der Kantenfläche **2** eingreift und zu dem gewünschten Abheben vorstehender Partikel führt, dies insbesondere in einer Mittellage der Holzwerkstoffplatte **3,** die typischerweise aufgrund ihrer geringeren Dichte am stärksten von unerwünscht vorstehenden Partikeln betroffen ist. Das Maß, in dem der Arbeitsbereich **10** konvex ausgeformt ist, ist dabei in **Figur 5** überhöht dargestellt. Insbesondere kann der maximale Radius **34** zwischen 2 % und 10 %, vorzugsweise zwischen 3 % und 8 %, weiter vorzugsweise zwischen 4 % und 6 %, größer sein als der minimale Radius **33** des Werkzeugs **5.** Dieses Merkmal kann unabhängig von den übrigen Merkmalen des Ausführungsbeispiels vorteilhaft sein.

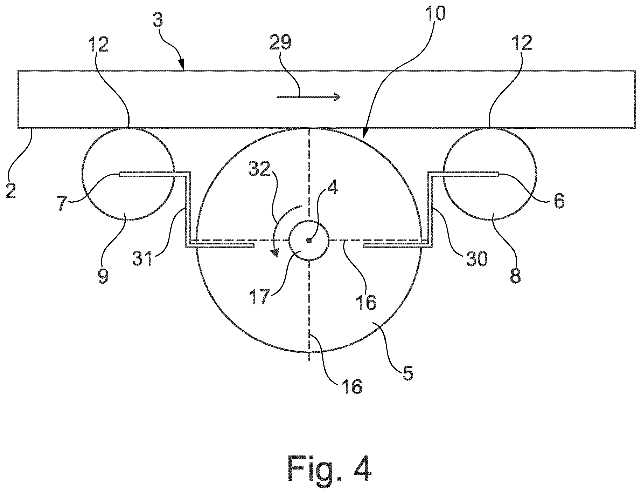

In dem gezeigten Beispiel umfasst das Aggregat **1** Tastrollen **8, 9,** die sich besonders gut anhand von **Figur 4** ergeben, der Einfachheit halber jedoch in **Figur 1**nicht dargestellt sind. Die Tastrollen **8, 9** sind mittels Koppelarmen **30, 31** derart mit dem Werkzeug **5** gekoppelt, dass die Tastrollen **8, 9 in** Kraft übertragender Weise mit dem Werkzeug **5** verbunden sind. Hierbei sind die Tastrollen **8, 9** derart relativ zu dem Werkzeug **5** angeordnet, dass die Holzwerkstoffplatte **3** im Zuge einer Bewegung in einer Vorschubrichtung **29** relativ zu dem Aggregat **1** zuerst mit einer Kontaktfläche **12** der Tastrollen **9,** sodann mit dem Arbeitsbereich **10** des Werkzeugs **5** und schließlich mit einer Kontaktfläche **12** der Tastrolle **8** in Kontakt tritt. Mit anderen Worten ist das Werkzeug **5** zwischen den Tastrollen **8, 9** angeordnet. Die Tastrollen **8, 9** sind dazu eingerichtet, das Werkzeug **5** abstandsmäßig relativ zu der Holzwerkstoffplatte **3** zu führen, sodass ein mechanischer Eingriff des Arbeitsbereichs **10** mit der Kantenfläche **2** lediglich minimal, nämlich ausschließlich in der gewünschten, Partikel abhebenden Weise eintritt. Ein schleifender, über eine gesamte Dicke der Holzwerkstoffplatte **3** stattfindender planmäßiger Abtrag von Material in dem Kantenfläche **2** ist nicht beabsichtigt. Die Tastrollen **8, 9** haben neben der Führungsfunktion für das Werkzeug **5** ferner eine mechanische Auswirkung auf den Kantenfläche **2,** indem die Tastrollen 8, **9** über die Kantenfläche **2** vorstehende Partikel, insbesondere Späne, andrücken und insbesondere in das Material der Holzwerkstoffplatte **3** eindrücken können, wodurch ein glättender Effekt auf die Kantenfläche **2** ausgeübt wird.

Im Zuge des Betriebs der Vorrichtung **19** wird die Holzwerkstoffplatte **3** in der Vorschubrichtung **29** relativ zu dem Aggregat **1** bewegt, wobei die Tastrollen **8, 9** um ihre jeweiligen Drehachsen **6, 7** frei drehbar gelagert sind und aufgrund eines reibenden Kontakts an den Kontaktflächen **12** mit der Kantenfläche **2** an letzterer abrollen. Das Werkzeug 5 wird derweil mittels der Antriebswelle **18** aktiv in einer Drehrichtung **32** drehangetrieben, die in dem gezeigten Beispiel entgegen der Vorschubrichtung **29** orientiert ist.

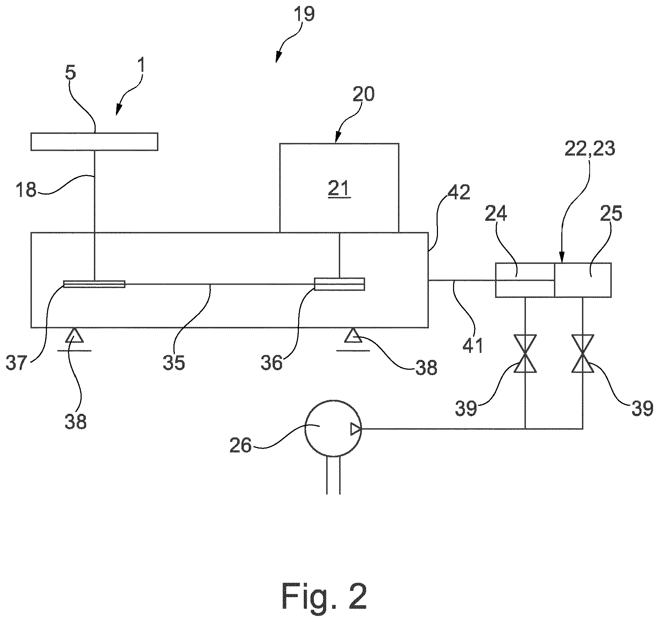

Für den Betrieb des Aggregats **1** umfasst die Vorrichtung **19** die vorstehend genannte Antriebseinheit **20,** die in dem gezeigten Beispiel einen elektrischen Antrieb **21** in Form eines Elektromotors umfasst. Wie sich insbesondere anhand von **Figur** 2 ergibt, ist der Antrieb **21** mittels einer Abtriebswelle mit einer Abtriebsscheibe **36** gekoppelt, die wiederum mittels eines Treibriemens **35** mit einer Antriebsscheibe **37** verbunden ist. Auf diese Weise kann ein mittels des Antriebs **21** zur Verfügung gestelltes Drehmoment über den von der Abtriebsscheibe **36,** dem Treibriemen **35** und der Antriebsscheibe **37** gebildeten Riementrieb auf die Antriebswelle **18** übertragen werden, die mit der Antriebsscheibe **37** zusammenwirkt. Aufgrund der drehmomentübertragenen Koppelung der Antriebswelle **18** mit dem Werkzeug **5** ist letzteres effektiv mittels des Antriebs **21** drehantreibbar.

Die Vorrichtung **19** umfasst ferner eine Spanneinrichtung **22,** die in dem gezeigten Beispiel von einer Kolben-Zylinder-Einheit **23** gebildet ist. Die Spanneinrichtung **22** umfasst einen Kolben **41,** der unmittelbar mit einem Gehäuse **42** der Vorrichtung **19** verbunden ist. Das Gehäuse **42** ist auf Gleitlagern **38** gelagert, sodass es parallel zu einer Hubrichtung des Kolbens **41** bewegbar ist. Die Kolben-Zylinder-Einheit **23** ist in dem gezeigten Beispiel doppelwirkend ausgebildet und umfasst zwei Arbeitsräume **24, 25.** Diese sind wechselweise mit einem Arbeitsfluid beaufschlagbar, das hier von Luft gebildet ist. Hierzu sind die beiden Arbeitsräume **24, 25** mit einem Kompressor **26** verbunden, wobei in dem gezeigten Beispiel eine Leitung von dem Kompressor **26** zu den Arbeitsräumen **24, 25** mittels Absperrventilen **39** steuerbar ist. Mittels der Spanneinrichtung **22** ist das Aggregat **1** gegen die Kantenfläche 2 vorspannbar, wobei der Arbeitsraum **25** mit pneumatischem Druck beaufschlagt wird. Hierdurch wird der Kolben **41** aus der Kolben-Zylinder-einer **23** ausgefahren und das Gehäuse **42** mitsamt dem daran angeordneten Aggregat **1** in Richtung auf die Holzwerkstoffplatte **3** zu bewegt. Wenn das Aggregat **1** außer Eingriff mit der Holzwerkstoffplatte **3** gebracht werden soll, wird alternativ der Arbeitsraum **24** mit pneumatischem Druck beaufschlagt, sodass der Kolben **41** in den Zylinder eingezogen wird. Daraufhin verliert das Werkzeug **5** seinen Eingriff mit der Kantenfläche **2** der Holzwerkstoffplatte **3.**

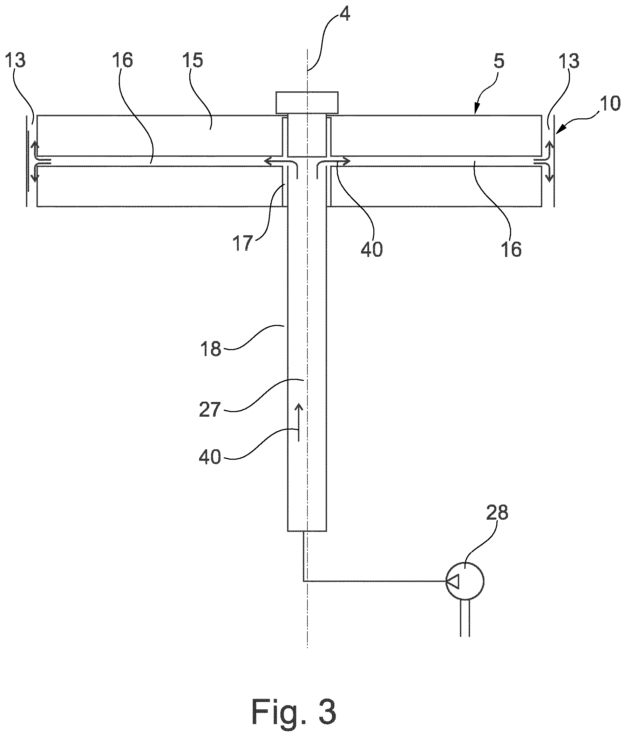

In besonders bevorzugter Weise ist das Werkzeug **5** in dem gezeigten Beispiel mit insgesamt vier Spülkanälen **16** ausgestattet, die sich besonders gut anhand der Darstellung gemäß **Figur 3** ergeben. Die Spülkanäle **16** erstrecken sich radial bezogen auf die Werkzeugachse **4** innerhalb eines Werkzeugkörpers **15.** Insbesondere können die Spülkanäle **16** in den Werkzeugkörper **15** gebohrt sein. Hierbei münden die Spülkanäle **16** zum einen radial innen liegend in die Wellenaufnahme **17** sowie radial außen liegend in Abfuhrkanäle **13.** Die Antriebswelle **18** ist in dem gezeigten Beispiel als Hohlwelle ausgebildet, sodass die Antriebswelle **18** einen Strömungskanal **27** ausbildet. Die Antriebswelle **18** umfasst ferner radiale Öffnungen, mittels derer im Bereich der Wellenaufnahme **17** eine strömungstechnische Verbindung zu den Spülkanälen **16** hergestellt ist. Auf diese Weise ist es möglich, einen Spülluftstrom **40,** der dem Strömungskanal **27** der Antriebswelle **18** ausgehend von einem Kompressor **28** zugeleitet wird, in die Spülkanäle **16** einzuleiten, durch die hindurch der Spülluftstrom **40** zu den Abfuhrkanälen **13** gelangt. Dort kann er austreten und Partikel, die in den Abfuhrkanälen **13** vorliegen, aus selbigen austragen. Hierdurch ist die zuverlässige Abfuhr von Partikeln, die von der Kantenfläche **2** der Holzwerkstoffplatte 3 abgenommen werden, sichergestellt.

In einem bestimmungsgemäßen Betrieb der erfindungsgemäßen Vorrichtung **19** werden nacheinander eine Vielzahl von Holzwerkstoffplatten **3** dem Aggregat **1** zugeführt, wobei das Aggregat **1** typischerweise feststehend ausgebildet ist und die Holzwerkstoffplatten **3** in die Vorschubrichtung **29** relativ zu dem Aggregat **1** bewegt und auf diese Weise an dem Aggregat **1** entlanggeführt werden. Das Aggregat **1** tritt sowohl mit den Tastrollen **8, 9** als auch mit dem Werkzeug **5** in bestimmungsgemäßen Eingriff mit der jeweiligen Kantenfläche **2** der Holzwerkstoffplatte **3,** wodurch in gewünschter Weise vorstehende Partikel an der Kantenfläche **2** abgetragen werden. Auf diese Weise ist ein unerwünschtes Abheben derartiger Partikel im Zuge eines Leimauftrags auf die Kantenfläche **2** verbunden mit einem Eintragen dieser Partikel in einen Leimtopf des Leims vermieden. Nach der Bearbeitung der Kantenfläche **2** mittels des Aggregats **1** wird mittels einer in den Figuren nicht dargestellten und grundsätzlich im Stand der Technik bekannten Vorrichtung zur Beauftragung von Leim die Kantenfläche **2** mit Leim beschichtet, woraufhin ein jeweiliges Kantenprofil, mit dem die Kantenfläche **2** überdeckt werden soll, aufgebracht und angedrückt wird. Diese sich an das Aggregat **1** anschließenden Arbeitsschritte sind im Stand der Technik bekannt. Für die Bearbeitung der Kantenfläche **2** wird das Werkzeug **5** in dem gezeigten Beispiel mit **1** einer Drehzahl von 500 Umdrehungen pro Minute um die Werkzeugachse **4** in die Drehrichtung **32** drehangetrieben. Die Drehrichtung **32** des Werkzeugs **5** ist mithin in dem gezeigten Beispiel gegenläufig zu der Vorschubrichtung **29** der Holzwerkstoffplatte **3.**

### Bezugszeichenliste

- 1: Aggregat
- 2: Kantenfläche
- 3: Holzwerkstoffplatte
- 4: Werkzeugachse
- 5: Werkzeug
- 6: Drehachse
- 7: Drehachse
- 8: Tastrolle
- 9: Tastrolle
- 10: Arbeitsbereich
- 11: Dicke
- 12: Kontaktfläche
- 13: Abfuhrkanal
- 14: Stirnseite
- 15: Werkzeugkörper
- 16: Spülkanal
- 17: Wellenaufnahme
- 18: Antriebswelle
- 19: Vorrichtung
- 20: Antriebseinheit
- 21: Antrieb
- 22: Spanneinrichtung
- 23: Kolben-Zylinder-Einheit
- 24: Arbeitsraum
- 25: Arbeitsraum
- 26: Kompressor
- 27: Strömungskanal
- 28: Kompressor
- 29: Vorschubrichtung
- 30: Koppelarm
- 31: Koppelarm
- 32: Drehrichtung
- 33: Radius
- 34: Radius
- 35: Treibriemen
- 36: Abtriebsscheibe
- 37: Antriebsscheibe
- 38: Gleitlager
- 39: Absperrventil
- 40: Spülluftstrom
- 41: Kolben
- 42: Gehäuse

## Patentansprüche

1. Aggregat (1) zur Bearbeitung einer Kantenfläche (2) einer Holzwerkstoffplatte (3) im Vorfeld eines Leimauftrags, umfassend
- ein um eine Werkzeugachse (4) drehantreibbares Werkzeug (5),
wobei das Werkzeug (5) einen sich kreisringförmig um die Werkzeugachse (4) umlaufenden Arbeitsbereich (10) aufweist,
wobei der Arbeitsbereich (10) ein Arbeitsrelief aufweist, mittels dessen das Werkzeug (5) bei bestimmungsgemäßer Verwendung in Eingriff mit der Kantenfläche (2) treten kann,
**dadurch gekennzeichnet, dass**
der Arbeitsbereich (10) - in einem die Werkzeugachse (4) des Werkzeugs (5) beinhaltenden Querschnitt des Werkzeugs (5) betrachtet - konvex ausgeformt ist,
wobei in dem Arbeitsbereich (10) mindestens ein radial bezogen auf die Werkzeugachse (4) zurückgesetzter Abfuhrkanal (13) ausgebildet ist, mittel dessen von von der Kantenfläche (2) abgenommene Partikel abführbar sind.

2. Aggregat (1) nach Anspruch 1, **gekennzeichnet durch** zwei, jeweils eine um eine Drehachse (6, 7) drehbare Tastrollen (8, 9), wobei die Tastrollen (8, 9) dazu eingerichtet sind, das Werkzeug (5) relativ zu der Kantenfläche (2) abstandsmäßig zu führen, wobei die Drehachsen (6, 7) der Tastrollen (8, 9) parallel zueinander sowie parallel zu der Werkzeugachse (4) des Werkzeugs (5) orientiert sind.

3. Aggregat (1) nach Anspruch 2, **dadurch gekennzeichnet, dass** die Tastrollen (8, 9) derart relativ zu dem Werkzeug (5) angeordnet sind, dass bei einer bestimmungsgemäßen Bewegung der Holzwerkstoffplatte (3) relativ zu dem Aggregat (1) die Kantenfläche (2) sowohl mit Kontaktflächen (12) der Tastrollen (8, 9) als auch mit dem Arbeitsbereich (10) des Werkzeugs (5) in Kontakt tritt.

4. Aggregat (1) nach Anspruch 2 oder 3, **dadurch gekennzeichnet, dass** das Werkzeug (5) zwischen den beiden Tastrollen (8, 9) angeordnet ist, sodass im Zuge einer Bearbeitung der Kantenfläche (2) eine jeweilige Stelle der Kantenfläche (2) zuerst mit der Kontaktfläche (12) der ersten Tastrolle (8), anschließend mit dem Arbeitsbereich (10) des Werkzeugs (5) und schließlich mit der Kontaktfläche (12) der zweiten Tastrolle (9) in Kontakt tritt.

5. Aggregat (1) nach einem der vorhergehenden Ansprüche, **dadurch gekennzeichnet, dass** der Abfuhrkanal (13) sich zumindest anteilig in eine Dickenrichtung des Werkzeugs (5) bis zu mindestens einer Stirnseite (14) des Werkzeugs (5) erstreckt.

6. Aggregat (1) nach einem der vorhergehenden Ansprüche, **dadurch gekennzeichnet, dass** das Werkzeug (5) mindestens einen sich in radiale Richtung bezogen auf die Werkzeugachse (4) durch einen Werkzeugkörper (15) des Werkzeugs (5) hindurch erstreckenden Spülkanal (16) aufweist, der sich von einer umfangsseitigen Oberfläche des Werkzeugs (5) bis zu einer zentralen Wellenaufnahme (17) des Werkzeugs (5) erstreckt, mittels der das Werkzeug (5) an einer Antriebswelle (18) lagerbar ist.

7. Aggregat (1) nach Anspruch 5 und 6, **dadurch gekennzeichnet, dass** der Spülkanal (16) umfangsseitig in einem Abfuhrkanal (13) mündet.

8. Vorrichtung (19) zur Bearbeitung einer Kantenfläche (2) einer Holzwerkstoffplatte (3) im Vorfeld eines Leimauftrags, umfassend
- ein Aggregat (1) zur Bearbeitung einer Kantenfläche (2) einer Holzwerkstoffplatte (3) im Vorfeld eines Leimauftrags sowie
- eine Antriebseinheit (20) zum Betrieb des Aggregats (1),
wobei die Antriebseinheit (20) mindestens einen elektrischen Antrieb (21) umfasst, mittels dessen eine Antriebswelle (18) drehantreibbar ist,
wobei ein Werkzeug (5) des Aggregats (1) eine zentrale Wellenaufnahme (17) aufweist, mittels der das Werkzeug (5) in Drehmoment übertragender Weise an der Antriebswelle (18) gelagert ist,
**dadurch gekennzeichnet, dass**
das Aggregat (1) gemäß einem der vorhergehenden Ansprüche ausgebildet ist.

9. Vorrichtung (19) nach Anspruch 8, **gekennzeichnet durch** eine Spanneinrichtung (22), mittels der das Aggregat (1) in Richtung auf eine jeweilige Kantenfläche (2) zu vorspannbar ist, sodass das Werkzeug (5), vorzugsweise ferner Tastrollen (8, 9) des Aggregats (1), im Zuge einer Bewegung der Holzwerkstoffplatte (3) relativ zu dem Aggregat (1) mit der Kantenfläche (2) in bearbeitendem Kontakt haltbar sind.

10. Vorrichtung (19) nach Anspruch 9, **dadurch gekennzeichnet, dass** die Spanneinrichtung (22) eine doppelwirkende Kolben-Zylinder-Einheit (23) umfasst, die zwei Arbeitsräume (24, 25) aufweist, wobei vorzugsweise die Spanneinrichtung (22) einen Kompressor (26) umfasst, mittels dessen die Arbeitsräume (24, 25) wechselweise mit pneumatischem Druck beaufschlagbar sind.

11. Vorrichtung (19) nach einem der vorhergehenden Ansprüche, **dadurch gekennzeichnet, dass** die Antriebswelle (18) als Hohlwelle ausgebildet ist, die einen Strömungskanal (27) für ein Reinigungsmedium bereitstellt, wobei vorzugsweise die Antriebswelle (18) mittelbar oder unmittelbar an einem der Wellenaufnahme (17) des Werkzeugs (5) abgewandten Ende mit einem Kompressor (28) zusammenwirkt, mittels dessen der Strömungskanal (27) mit einem Spülluftstrom (40) beaufschlagbar ist.

12. Vorrichtung (19) nach Anspruch 11, **dadurch gekennzeichnet, dass** das Werkzeug (5) mindestens einen sich in radiale Richtung bezogen auf die Werkzeugachse (4) durch einen Werkzeugkörper (15) des Werkzeugs (5) hindurch erstreckenden Spülkanal (16) aufweist, der sich von einer umfangsseitigen Oberfläche des Werkzeugs (5) bis zu der Wellenaufnahme (17) erstreckt, wobei der Spülkanal (16) strömungstechnisch mit dem Strömungskanal (27) der Antriebswelle (18) verbunden ist, sodass ein Spülluftstrom (40) von dem Strömungskanal (27) in den Spülkanal (16) übertreten kann.

13. Vorrichtung (19) nach Anspruch 12, **dadurch gekennzeichnet, dass** der Spülkanal (16) umfangsseitig in einem Abfuhrkanal (13) endet, der in einem Arbeitsbereich (10) des Werkzeugs (5) ausgebildet ist und mittel dessen von von der Kantenfläche (2) abgenommene Partikel abführbar sind.

14. Verfahren zur Bearbeitung einer Holzwerkstoffplatte (3) mittels eines Aggregats (1), das Aggregat (1) umfassend
- ein um eine Werkzeugachse (4) drehantreibbares Werkzeug (5)
wobei das Werkzeug (5) einen sich kreisringförmig um die Werkzeugachse (4) umlaufenden Arbeitsbereich (10) aufweist,
wobei der Arbeitsbereich (10) ein Arbeitsrelief aufweist, mittels dessen das Werkzeug (5) bei bestimmungsgemäßer Verwendung in Eingriff mit der Kantenfläche (2) treten kann,
wobei der Arbeitsbereich (10) - in einem die Werkzeugachse (4) des Werkzeugs (5) beinhaltenden Querschnitt des Werkzeugs (5) betrachtet - konvex ausgeformt ist,
wobei in dem Arbeitsbereich (10) mindestens ein radial bezogen auf die Werkzeugachse (4) zurückgesetzter Abfuhrkanal (13) ausgebildet ist, mittel dessen von von der Kantenfläche (2) abgenommene Partikel abführbar sind,
wobei die Holzwerkstoffplatte (3) geschnitten und an einer hierdurch gebildeten Kantenfläche (2) der Holzwerkstoffplatte (3) ein Kantenprofil aufgeleimt wird,
**dadurch gekennzeichnet, dass**
die Kantenfläche (2) vor dem Aufleimen des Kantenprofils mittels des Werkzeugs (5) bearbeitet wird.

15. Verfahren nach Anspruch 14, **dadurch gekennzeichnet, dass** eine Drehzahl und eine Drehrichtung des Werkzeugs (5) in Abhängigkeit von einer Vorschubgeschwindigkeit der Holzwerkstoffplatte (3) und/oder in Abhängigkeit einer Art der Holzwerkstoffplatte (3) gewählt wird.

## Claims

1. An assembly (1) for machining an edge surface (2) of a wood-based panel (3) prior to a glue application, comprising
- a tool (5) which can be driven in rotation about a tool axis (4),
wherein the tool (5) comprises a working area (10) rotating in a circular ring about the tool axis (4),
wherein the working area (10) comprises a working relief, by means of which the tool (5) can engage with the edge surface (2) when used as intended,
**characterised in that**
the working area (10) - viewed in a cross-section of the tool (5) containing the tool axis (4) of the tool (5) - is formed convex,
wherein at least one discharge channel (13) set back radially relative to the tool axis (4) is formed in the working area (10), by means of which discharge channel particles removed from the edge surface (2) can be carried away.

2. The assembly (1) according to claim 1, **characterised by** two sensing rollers (8, 9) each rotatable about an axis of rotation (6, 7), wherein the sensing rollers (8, 9) are designed to guide the tool (5) relative to the edge surface (2) in terms of distance, wherein the axes of rotation (6, 7) of the sensing rollers (8, 9) are orientated parallel to one another and parallel to the tool axis (4) of the tool (5).

3. The assembly (1) according to claim 2, **characterised in that** the sensing rollers (8, 9) are arranged relative to the tool (5) in such a way that, when there is a movement of the wood-based panel (3) relative to the assembly (1) in the intended manner, the edge surface (2) comes into contact both with the contact surfaces (12) of the sensing rollers (8, 9) as well as with the working area (10) of the tool (5).

4. The assembly (1) according to claim 2 or 3, **characterised in that** the tool (5) is arranged between the two sensing rollers (8, 9), so that in the course of the machining of the edge surface (2) a given point of the edge surface (2) first comes into contact with the contact area (12) of the first sensing roller (8), then with the working area (10) of the tool (5) and finally with the contact area (12) of the second sensing roller (9).

5. The assembly (1) according to any one of the preceding claims, **characterised in that** the discharge channel (13) extends at least in part in a thickness direction of the tool (5) up to at least one end face (14) of the tool (5).

6. The assembly (1) according to any one of the preceding claims, **characterised in that** the tool (5) comprises at least one flushing channel (16) extending through a tool body (15) of the tool (5) in a radial direction relative to the tool axis (4), which flushing channel extends from a circumferential surface of the tool (5) up to a central shaft socket (17) of the tool (5), by means of which the tool (5) can be mounted on a drive shaft (18).

7. The assembly (1) according to claim 5 and 6, **characterised in that** the flushing channel (16) emerges at the peripheral side in a discharge channel (13).

8. A device (19) for machining an edge surface (2) of a wood-based panel (3) prior to a glue application, comprising
- an assembly (1) for machining an edge surface (2) of a wood-based panel (3) prior to a glue application and
- a drive unit (20) for operating the assembly (1),
wherein the drive unit (20) comprises at least one electric drive (21), by means of which a drive shaft (18) can be driven in rotation,
wherein a tool (5) of the assembly (1) comprises a central shaft socket (17), by means of which the tool (5) is mounted on the drive shaft (18) in a torque-transmitting manner,
**characterised in that**
the assembly (1) is constituted according to any one of the preceding claims.

9. The device (19) according to claim 8, **characterised by** a clamping device (22), by means of which the assembly (1) can be preloaded in the direction of a given edge surface (2), so that the tool (5), preferably also the sensing rollers (8, 9) of the assembly (1), can be kept in machining contact with the edge surface (2) as the wood-based panel (3) is moved relative to the assembly (1).

10. The device (9) according to claim 9, **characterised in that** the clamping device (22) comprises a double-acting piston-cylinder unit (23), which comprises two working chambers (24, 25), wherein the clamping device (22) preferably comprises a compressor (26), by means of which the working chambers (24, 25) can be subjected alternately to pneumatic pressure.

11. A device (19) according to any one of the preceding claims, **characterised in that** the drive shaft (18) is designed as a hollow shaft, which provides a flow channel (27) for a cleaning medium, wherein the drive shaft (18) preferably interacts indirectly or directly at an end facing away from the shaft socket (17) of the tool (5) with a compressor (28), by means of which the flow channel (27) can be acted upon with a flushing air flow (40).

12. The device (19) according to claim 11, **characterised in that** the tool (5) comprises at least one flushing channel (16) extending in a radial direction relative to the tool axis (4) through a tool body (15) of the tool (5), which flushing channel extends from a circumferential surface of the tool (5) up to the tool socket (17), wherein the flushing channel (16) is connected fluidically to the flow channel (27) of the drive shaft (18), so that a flushing air flow (40) can pass from the flow channel (27) into the flushing channel (16).

13. The device (19) according to claim 12, **characterised in that** the flushing channel (16) ends at the circumference in a discharge channel (13), which is formed in a working area (10) of the tool (5) and by means of which particles removed from the edge surface (2) can be carried away.

14. A method for machining a wood-based panel (3) by means of an assembly (1), the assembly (1) comprising
- a tool (5) which can be driven in rotation about a tool axis (4),
wherein the tool (5) comprises a working area (10) rotating in a circular ring about the tool axis (4),
wherein the working area (10) comprises a working relief, by means of which the tool (5) can engage with the edge surface (2) when used as intended,
wherein the working area (10) - viewed in a cross-section of the tool (5) containing the tool axis (4) of the tool (5) - is formed convex,
wherein at least one discharge channel (13) set back radially relative to the tool axis (4) is formed in the working area (10), by means of which particles removed from the edge surface (2) can be carried away,
wherein the wood-based panel (3) is cut and an edge profile is glued to an edge surface (2) of the wood-based panel (3) thus formed,
**characterised in that**
the edge surface (2) is machined by means of the tool (5) before the edge profile is glued on.

15. The method according to claim 14, **characterised in that** a speed and direction of rotation of the tool (5) is selected depending on a feed speed of the wood-based panel (3) and/or depending on a type of the wood-based panel (3).

## Revendications

1. Ensemble (1) destiné au traitement d'une surface de bord (2) d'un panneau en matériaux dérivés du bois (3) en préliminaire à un encollage, comprenant
- un outil (5) pouvant être entraîné en rotation autour d'un axe d'outil (4),
sachant que l'outil (5) comporte une zone de travail (10) passant en périphérie en forme circulaire autour de l'axe d'outil (4),
sachant que la zone de travail (10) comporte un relief de travail, au moyen duquel l'outil (5) peut en utilisation conforme entrer en prise avec la surface de bord (2),
**caractérisé en ce que**
la zone de travail (10), vue dans une section de l'outil (5) contenant l'axe d'outil (4) de l'outil (5), est conformée de façon convexe,
sachant que dans la zone de travail (10) au moins un conduit d'évacuation (13) reculé radialement par rapport à l'axe d'outil (4) est constitué au moyen duquel des particules prélevées de la surface de bord (2) peuvent être évacuées.

2. Ensemble (1) selon la revendication 1, **caractérisé par** deux galets palpeurs (8, 9) pouvant respectivement tourner autour d'un axe de rotation (6, 7), sachant que les galets palpeurs (8, 9) sont agencés pour guider à bonne distance l'outil (5) par rapport à la surface de bord (2), sachant que les axes de rotation (6, 7) des galets palpeurs (8, 9) sont orientés parallèlement l'un à l'autre ainsi que parallèlement à l'axe d'outil (4) de l'outil (5).

3. Ensemble (1) selon la revendication 2, **caractérisé en ce que** les galets palpeurs (8, 9) sont disposés par rapport à l'outil (5) de telle manière que lors d'un déplacement conforme du panneau en matériaux dérivés du bois (3) par rapport à l'ensemble (1), la surface de bord (2) entre en contact tant avec les surfaces de contact (12) des galets palpeurs (8, 9) qu'avec la zone de travail (10) de l'outil (5).

4. Ensemble (1) selon la revendication 2 ou 3, **caractérisé en ce que** l'outil (5) est disposé entre les deux galets palpeurs (8, 9) de telle sorte qu'au cours d'un traitement de la surface de bord (2) un emplacement respectif de la surface de bord (2) entre d'abord en contact avec la surface de contact (12) du premier galet palpeur (8), ensuite avec la zone de travail (10) de l'outil (5) et en finale avec la surface de contact (12) du deuxième galet palpeur (9).

5. Ensemble (1) selon l'une quelconque des revendications précédentes, **caractérisé en ce que** le conduit d'évacuation (13) s'étend au moins en partie dans un sens d'épaisseur de l'outil (5) jusqu'à au moins un côté avant (14) de l'outil (5).

6. Ensemble (1) selon l'une quelconque des revendications précédentes **caractérisé en ce que** l'outil (5) comporte au moins un conduit de rinçage (16) s'étendant dans le sens radial en référence à l'axe d'outil (4) à travers un corps d'outil (15) de l'outil (5), qui s'étend d'une surface périphérique de l'outil (5) jusqu'à un logement d'outil central (17) de l'outil (5), au moyen duquel l'outil (5) peut être logé sur un arbre d'entraînement (18).

7. Ensemble (1) selon la revendication 5 ou 6, **caractérisé en ce que** le conduit de rinçage (16) débouche côté périphérie dans un conduit d'évacuation (13).

8. Dispositif (19) destiné au traitement d'une surface de bord (2) d'un panneau en matériaux dérivés du bois (3) en préliminaire à un encollage, comprenant
- un ensemble (1) destiné au traitement d'une surface de bord (2) d'un panneau en matériaux dérivés du bois (3) en préliminaire à un encollage, ainsi qu'
- une unité d'entraînement (20) pour actionner l'ensemble (1),
sachant que l'unité d'entraînement (20) comprend au moins un système d'entraînement électrique (21) au moyen duquel un arbre d'entraînement (18) peut être entraîner en rotation,
sachant qu'un outil (5) de l'ensemble (1) comporte un logement d'arbre central (17) au moyen duquel l'outil (5) est logé sur l'arbre d'entraînement (18) d'une manière transmettant un couple,
**caractérisé en ce que**
l'ensemble (1) est constitué selon l'une quelconque des revendications précédentes.

9. Dispositif (19) selon la revendication 8, **caractérisé par** un système de serrage (22), au moyen duquel l'ensemble (1) peut être précontraint en direction d'une surface de bord (2) respective de telle manière que l'outil (5), de préférence en plus les galets palpeurs (8, 9) de l'ensemble (1) peuvent être maintenus en contact de travail avec la surface de bord (2) au cours d'un mouvement du panneau en matériaux dérivés du bois (3) par rapport à l'ensemble (1).

10. Dispositif (19) selon la revendication 9, **caractérisé en ce que** le système de serrage (22) comprend une unité piston-vérin à double effet (23), qui comporte deux espaces de travail (24, 25), sachant de préférence que le système de serrage (22) comprend un compresseur (26) au moyen duquel les espaces de travail (24, 25) peuvent être sollicités en alternance par de la pression pneumatique.

11. Dispositif (19) selon l'une quelconque des revendications précédentes, **caractérisé en ce que** l'arbre d'entraînement (18) est constitué sous la forme d'un arbre creux qui fournit un conduit d'écoulement (27) pour un milieu de nettoyage, sachant de préférence que l'arbre d'entraînement (18) coopère indirectement ou directement sur une extrémité éloignée du logement d'arbre (17) de l'outil (5) avec un compresseur (28) au moyen duquel on peut appliquer un courant d'air de rinçage (40) au conduit d'écoulement (27).

12. Dispositif (19) selon la revendication 11, **caractérisé en ce que** l'outil (5) comporte au moins un conduit de rinçage (16) s'étendant dans le sens radial en référence à l'axe d'outil (4) à travers un corps d'outil (15) de l'outil (5), qui s'étend d'une surface périphérique de l'outil (5) jusqu'au logement d'outil central (17), sachant que le conduit de rinçage (16) est relié selon la technique des fluides avec le conduit d'écoulement (27) de l'arbre d'entraînement (18) de telle manière qu'un courant d'air de rinçage (40) peut passer du conduit d'écoulement (27) dans le conduit de rinçage (16).

13. Dispositif (19) selon la revendication 12, **caractérisé en ce que** le conduit de rinçage (16) se termine côté périphérie dans un conduit d'évacuation (13), qui est constitué dans une zone de travail (10) de l'outil (5) et au moyen duquel des particules prélevées de la surface de bord (2) peuvent être évacuées.

14. Procédé destiné au traitement d'un panneau en matériaux dérivés du bois (3) au moyen d'un ensemble (1), l'ensemble (1) comprenant
- un outil (5) pouvant être entraîné en rotation autour d'un axe d'outil (4),
sachant que l'outil (5) comporte une zone de travail (10) passant en périphérie en forme circulaire autour de l'axe d'outil (4),
sachant que la zone de travail (10) comporte un relief de travail, au moyen duquel l'outil (5) peut en utilisation conforme entrer en prise avec la surface de bord (2),
sachant que la zone de travail (10), vue dans une section de l'outil (5) contenant l'axe d'outil (4) de l'outil (5), est conformée de façon convexe,
sachant que dans la zone de travail (10) au moins un conduit d'évacuation (13) reculé radialement par rapport à l'axe d'outil (4) est constitué au moyen duquel des particules prélevées de la surface de bord (2) peuvent être évacuées,
sachant que le panneau en matériaux dérivés du bois (3) est coupé et un profil de bord est encollé sur une surface de bord (2) formée à cet effet du panneau en matériaux dérivés du bois (3)
**caractérisé en ce que**
la surface de bord (2) est traitée au moyen de l'outil (5) avant l'encollage du profil de bord.

15. Procédé selon la revendication 14, **caractérisé en ce qu'**une vitesse de rotation et un sens de rotation de l'outil (5) sont choisis en fonction d'une vitesse d'avance du panneau en matériaux dérivés du bois (3) et/ou en fonction d'un type de panneau en matériaux dérivés du bois (3).
